# EUROPEAN PATENT APPLICATION

(11) **EP 2 769 633 A1**
(43) Date of publication of application: **27.08.2014**
(21) Application number: 12841854.8
(22) Date of filing: 17.10.2012
(51) Int. Cl.: A42B 3/30

(54) **HANDS-FREE DEVICE**

(30) Priority: 20.10.2011 ES 201131682 P
(71) Applicant: MAT Communication Solutions, S.A., 08223 Terrassa (ES)
(72) Inventor: MATEU I CODINA, Xavier, E-08223 Terrassa (Barcelona) (ES)
(74) Representative: Morgades y Manonelles, Juan Antonio
(86) International application number: PCT/ES2012/070714
(87) International publication number: WO 2013/057345

(57) **Abstract**

The invention relates to improvements to hands-free devices, which are embodied as the introduction of new performance aspects for the device as a result of the modification of the microphone controls, which incorporates, in the microphone, a USB charging connector, thereby eliminating from the subject matter of the main patent a cable that connects the electronics of the left-hand box to a charging connector, and optionally, in addition to the push-key, a second key is added for adjusting the volume thereof.

## Description

### Object of the invention.

The invention relates to improvements to hands-free devices, which are embodied as the introduction of new performance aspects for the device as a result of the modification of the microphone controls and placing a USB charging connector in the microphone assembly, thereby eliminating from the subject matter of the main patent a cable that connects the electronics of the left-hand box to a charging connector.

Another aim of the invention is to incorporate, in addition to the push button, a second key, one of the uses of which can preferably be to adjust the volume of the device, decoupling this option from the other already existing in these types of devices.

### State of the art.

Spanish Patent application No. 200930867 of the same holder refers to a "Hands-free device" which, as indicated in claim 1, is characterized by comprising a loudspeaker inside a main unit and its body, with sound output on one of its sides, whereas the opposite side is attached to the helmet by adherent material, the loudspeaker box having means to control the device such as a multi-function switch and a jack type connector through a multipolar cable, whose functions are the following:
- To connect and disconnect the hands-free device.
- To accept and reject phone calls.
- To control the volume of the loudspeaker.
- To associate the device with other equipment such as a mobile phone, PDA, MP3, GPS...

Fitting a microphone to the body with a flexible rod, by means of a fixed connector.

These hands-free devices do not need to be inserted into the ear canal, and therefore they are not cumbersome to insert and remove, being usable by motorcyclists and other types of users, such as trekkers, skiers or cyclists.

By Additional Patent application no. 201031529 of the same holder, the purpose of the main patent was improved, adding the possibility that the people on the vehicle can communicate with users of other vehicles, and users wearing this device but not riding on the same vehicle, alternating this function without reducing the functions announced for the hands-free device of Spanish Patent application no. 200930867.

In the current state of the art of hands-free devices for two or more wheel vehicles there are no devices in which the microphone assembly incorporates in a compact manner a USB connector for charging the battery, and that in addition can also incorporate in said microphone assembly an additional push button preferably for adjusting the volume of the microphone.

One of the improvements of the 1st Additional Patent being communication between users of different vehicles. These improvements have led to the need to adjust the microphone volume to adapt to different voice volumes of users as well as ambient noise.

### Scope of the invention.

The scope of the invention is to provide hands-free devices to adjust the microphone volume according to different voice volumes of users as well as ambient noise.

Additionally, and bearing in mind that the hands-free system is installed inside the helmet, the user appreciates its simplicity; with this purpose a cable that linked the left-hand box of the device with a connector prepared for charging the batteries cable is eliminated and this is moved to the earphone housing, providing more comfort and convenience in the location of the device inside the helmet.

### Description of the invention.

This invention is characterised according to claim 1.

More specifically, the improvements of the invention consist of designing a microphone assembly that integrates at least the following components in a compact manner:
- the microphone (preferably located at the front of the microphone assembly),
- a function selector push button by which the user can control predetermined functions of the device by manually pressing the buttons, such as on/off or accepting calls,
- a socket adapted to receive a USB connector to charge the device's batteries,
- a LED pressing confirmation indicator designed to switch on or off when the user presses the function selector push button (30), and
- optionally, another push button to adjust the voice volume or other functions.

In one of the possible embodiments of the aforementioned patent applications, the one designed with two loudspeakers, it is modified with the introduction on the inside of the housing with the microphone corresponding to:
- A USB connector to charge the device's batteries.
- Optionally, another push button to adjust the voice volume.

All the other parts of the device in the "top range" version remain the same, i.e., if we are referring to versions with two earphones the same comprises:
- A left-hand box that includes inside:
   - Electronics of the hands-free device.
   - Battery.
   - Printed circuit board.
   - A hose with a connection tube to the box of a microphone with a multi-function push button.
- An LED indicator confirming the pressing.
- A right-hand box of identical dimensions and components as that of the left hand side, connected by a corresponding power cable.

In the versions called "mid range", the other parts of the device remain:
- A left-hand box that includes inside:
   - Electronics of the hands-free device.
   - Battery.
   - Printed circuit board.
- A hose with a connection tube to the box of a microphone with a multi-function push button.
- An LED indicator confirming the pressing.
- The right-hand box only contains an earphone.
- The electronics of the left-hand box uses preferably Bluetooth protocol with HFP profiles, HSP, or A2DP.

In the versions called "low range", the other parts of the circuit remain:
- A left-hand box that includes inside:
   - Electronics of the hands-free device.
   - Battery.
   - Printed circuit board.
- Microphone connected to the left-hand box via the corresponding cable.
- The electronics of the left-hand box uses preferably Bluetooth protocol with HFP or HSP profiles.

Other details and characteristics shall be shown throughout the description below referring to drawings attached to this report which are shown for illustrative but not limiting purposes a practical embodiment of the invention.

### Description of the drawings.

Figure 1 is a front elevation view of the microphone assembly (29), with the microphone (28) itself, the push button (30), the LED lamp (31) and optionally another push button (43), preferably for voice volume adjustment.
Figure 2 is a perspective view of the preferred version ("top range") of the hands-free device (25a), which is formed by two identical boxes (33i, 33d), designed for use inside a helmet using Velcro-type means (27) to secure them, which is placed on the outside of both boxes (33i, 33d).
Figure 3 is a detail view of the microphone assembly (29) of the hands-free device (25a).
Figure 4 is a perspective view of the second version ("mid range") of the hands-free device (25b), which is formed by a left-hand box (33i) and a right-hand element (33d').
Figure 5 is a perspective view of the third version ("low range") of the hands-free device (25c), which is formed by a single left-hand box (33i).

Below is a list of the different parts of the invention, that can be seen in the attached drawings and are indicated with their respective numbers: (25a) "top range" hands-free device, (25b) "mid range" hands-free device, (25c) "low range" hands-free device, (27d) adhesive tape, (28) foam, (29) microphone assembly, (30) multifunction push button, (31) An LED indicator confirming the pressing (31), (32) microphone holes, (33i) left box, (33d) right box, (34i) left box earphone, (34d) right box earphone, (35) microphone assembly connection tube, (37) push button preferably to adjust the voice volume, (38) function selector, (39) function selector connection cable, (40) charger connector connection tube, (42) battery, and (43) USB connector on the microphone (29).

### Description of an embodiment of the invention.

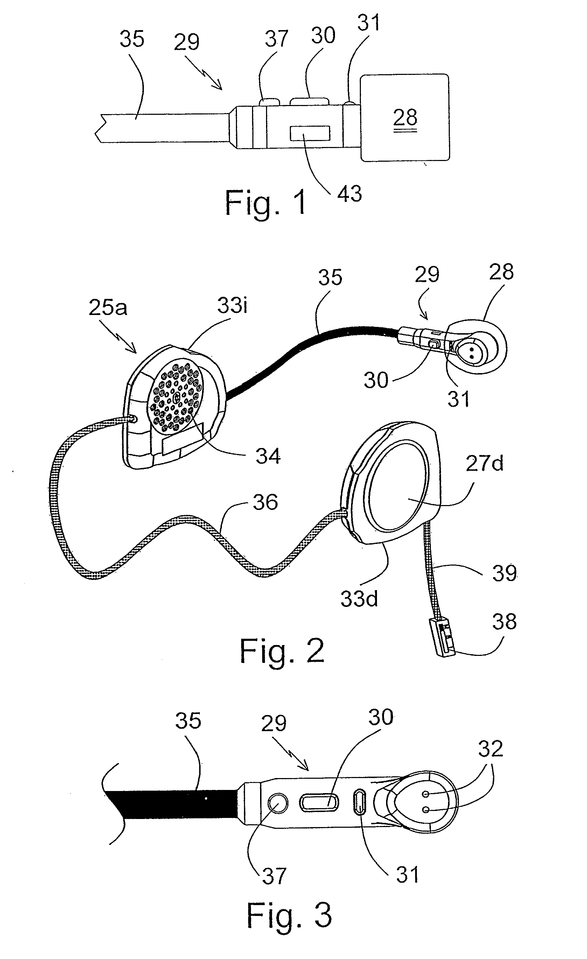

One of the preferred embodiments of the invention, and as can be seen in figure 1, the microphone assembly (29) comprises the following elements as improvements:
- a microphone (28) in the end,
- a socket adapted to receive a USB connector (43), such as a slot
- a function selector push button (30).
- a LED indicator confirming the pressing (31).
- optionally, a push button (37) preferably to adjust the microphone volume (29), in which case it allows the user to raise or lower the microphone volume (29) with a single finger pressure, (although it could be used for a different function).

With regard to the socket adapted for a USB connector (43), preferably a female USB connector, such as a "Mini-B" or "Micro-B" type connector.

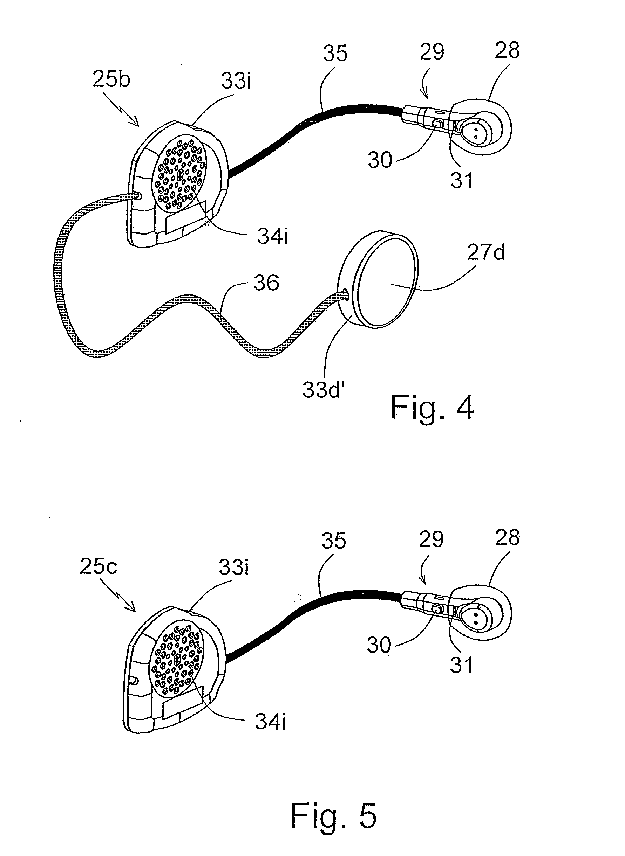

The architecture of the top, mid and low ranges represented in figures 2, 4 and 5 will be the same as described in the main patent and the 1st additional, with the exception that the connector (43) has been moved to the microphone assembly (29), eliminating the power cable, as can be seen in figure 1.

Additionally, and in the three previous versions, as has been already mentioned, it may incorporate a push button (37) preferably for volume, also integrated into the microphone assembly (29), which optionally allows the user to raise or lower the microphone volume (29) with a single finger pressure.

Having sufficiently described this invention using the drawings attached, it is easy to understand that any modification may be made to the detail which may be deemed to be appropriate, whenever these changes do not alter the essence of the invention summarised in the following claims.

## Claims

1. **- "HANDS-FREE DEVICE"** formed at least by an earphone which are used inside or over the ear canal and fitted inside a helmet or the like, comprising inside a main unit on the left-hand side or right-hand side, an earphone on its inner side, whereas the opposite side is coated by an adherent textile such as an adhesive element, the body of the main unit being connected by means of a connection tube to a microphone assembly, **characterised in that** the microphone assembly (29) comprises at least:
- a microphone (18),
- a function selector push button by which the user can control predetermined functions of the device by manually pressing the buttons, such as on/off or accepting calls, (30)
- a socket adapted to receive a USB connector to charge the device's batteries (43), and
- a LED pressing confirmation indicator (31) designed to switch on or off when the user presses the function selector push button (30).

2. **- "HANDS-FREE DEVICE"** according to the claim 1 or 2, **characterised in that** optionally the microphone assembly (29) comprises a push button (37) preferably to adjust the microphone volume (29), in which case it allows the user to raise or lower the microphone volume (29) with a single finger pressure.
